# EUROPÄISCHE PATENTSCHRIFT

(11) **EP 3 275 052 B1**
(45) Veröffentlichungstag und Bekanntmachung des Hinweises auf die Patenterteilung: **01.01.2020**
(21) Anmeldenummer: 16717566.0
(22) Anmeldetag: 24.03.2016
(51) Int. Cl.: H01R 13/504, B60R 16/02

(54) **BORDNETZELEMENT, KRAFTFAHRZEUG MIT EINEM SOLCHEN BORDNETZELEMENT SOWIE VERFAHREN ZUR HERSTELLUNG EINES SOLCHEN BORDNETZELEMENTS**
VEHICLE ELECTRICAL SYSTEM COMPONENT, VEHICLE EQUIPPED WITH SUCH COMPONENT AND METHOD FOR PRODUCING THE SAME
COMPOSANT DE RÉSEAU DE BORD POUR UN VÉHICULE, VÉHICULE ÉQUIPÉ D'UNE TELLE COMPOSANT ET SON PROCÉDÉ DE FABRICATION

(30) Priorität: 24.03.2015 DE 102015205292
(43) Veröffentlichungstag der Anmeldung: 31.01.2018
(73) Patentinhaber: LEONI Bordnetz-Systeme GmbH, 97318 Kitzingen (DE)
(72) Erfinder: DEHN, Manfred, 97318 Kitzingen (DE)
(74) Vertreter: FDST Patentanwälte
(86) Internationale Anmeldenummer: PCT/EP2016/056514
(87) Internationale Veröffentlichungsnummer: WO 2016/151075

(56) Entgegenhaltungen:
- EP-A1- 1 424 708
- EP-A1- 2 055 535
- EP-A2- 1 271 108
- CH-A- 513 716
- DE-A1-102012 010 095
- DE-U1- 8 702 058

## Beschreibung

Die Erfindung betrifft ein Bordnetzelement umfassend einen elektrischen Baustein, welcher zumindest bereichsweise von einem Gusselement umgossen ist. Die Erfindung betrifft weiterhin ein Kraftfahrzeug mit einem solchen Bordnetzelement sowie ein Verfahren zur Herstellung eines solchen Bordnetzelements.

Für die Herstellung von Werkstücken oder Bauteilen, beispielsweise Strukturbauteilen, aus Kunststoff werden häufig Thermoplaste, auch Plastomere genannt, eingesetzt, die durch ein Polymerisationsverfahren aus Monomeren hergestellt werden. Für die Fertigung der entsprechenden Bauteile werden die Thermoplaste dann erhitzt oder aufgeschmolzen und im schmelzflüssigen Zustand unter Druck in eine Gussform, Negativ-Form oder Werkstückform gespritzt. Nachfolgend wird die Gussform aktiv oder passiv gekühlt, bis sich der thermoplastische Kunststoff wieder verfestigt hat und sich das gegossene Bauteil aus der Gussform herauslösen lässt.

Im Kraftfahrzeugbereich werden weiter einige Bauteile oder Baugruppen bereichsweise mit einem Kunststoff ummantelt oder in einen Kunststoff eingebettet. Hierzu wird das entsprechende Bauteil oder die entsprechende Baugruppe mit einem aufgeschmolzenen Kunststoff umspritzt.

Die DE 87 02 058 U1 zeigt ein Bordnetzelement für ein Kraftfahrzeug. umfassend einen elektrischen Baustein, welcher bereichsweise mit einer aufgespritzten Ummantelung versehen ist.

Die CH 513 716 A beschreibt ein zweistufiges Verfahren, bei dem in einem herkömmlichen Polymerisationsverfahren ein einfaches, massives Guss stück gebildet wird und anschließend in einer zweiten Phase diese Gussform in eine Pressform transferiert und zu einem Formpressteil ausgebildet wird.

Ausgehend hiervon liegt der Erfindung die Aufgabe zugrunde, ein vorteilhaftes Bordnetzelement sowie ein vorteilhaftes Verfahren zur Herstellung eines entsprechenden Bordnetzelementes anzugeben.

Diese Aufgabe wird erfindungsgemäß gelöst durch ein Bordnetzelement mit den Merkmalen des Anspruchs 1 sowie durch ein Verfahren mit den Merkmalen des Anspruchs 12. Bevorzugte Weiterbildungen sind in den rückbezogenen Ansprüchen enthalten. Die im Hinblick auf das Bordnetzelement angeführten Vorteile und bevorzugten Ausgestaltungen sind sinngemäß auch auf das Verfahren übertragbar und umgekehrt.

Ein entsprechendes Bordnetzelement ist hierbei für ein Kraftfahrzeug ausgelegt und umfasst einen elektrischen Baustein sowie zumindest ein Gusselement aus einem Kunststoff, welches durch Gießen oder Spritzgießen hergestellt ist. Dabei entsteht der Kunststoff quasi vor Ort in einer beim Gießen bzw. Spritzgießen genutzten Negativ-Form, Werkstückform oder Gussform durch Polymerisation eines eingebrachten Monomers und dementsprechend wird das Gusselement durch ein In-situ-Polymerisationsverfahren hergestellt.

Unter "in situ polymerisation wird hierbei also verstanden, dass Ausgangskomponenten des Kunststoffes in die Werkzeugform eingebracht werden und erst in der Werkzeugform eine Polymerisation zur Ausbildung des eigentlichen Kunststoffes erfolgt.

Bei dem polymerisierten Kunststoff handelt es sich dabei insbesondere um einen thermoplastischen Kunststoff, speziell beispielsweise Polyamid. So ist beispielsweise eine in situ polymerisation von Polyamid bekannt, bei der eine Mischung aus einem monomeren Lactam und einem Katalysator mit einer Mischung aus einem monomeren Lactam und einem Aktivator zusammengebracht werden, um die Polymerisation zum Polyamid zu starten.

Anstatt also wie bisher üblich Kunststoffkomponenten eines Kraftfahrzeug-Bordnetzes, wie z.B. Hülsen oder Ummantelungen für Kabelstränge, mithilfe einer Kunststoff-Schmelze auszuformen, werden die entsprechenden Kunststoffelemente mittels eines In-situ-Polymerisationsverfahrens gefertigt.

Dabei ist ein entsprechendes In-situ-Polymerisationsverfahren für die Herstellung von Bordnetzelementen vor allem deswegen von Vorteil, da die beim Gießen oder Spritzgießen genutzte Gussmasse eine im Vergleich zu einer Thermoplast-Schmelze wesentlich geringere Viskosität aufweist, wodurch beispielsweise mit geringeren Drücken gearbeitet werden kann. Hierbei weist die Gussmasse je nach Zusammensetzung und dementsprechend je nachdem, aus welchem Kunststoff das Gusselement letzten Endes bestehen und welche Eigenschaften die Kunststoffkomponente des Bordnetzelementes aufweisen soll, eine Viskosität auf, die mit Wasser vergleichbar ist. Insbesondere weist die Gussmasse dabei auch eine niedrigere Viskosität als heute häufig eingesetzte Epoxidharz- oder Polyurethansysteme.

Dementsprechend lassen sich die Gussformen in einigen Fällen gänzlich ohne Überdruck allein durch Ausnutzung des Eigengewichts der Füllmasse befüllen und die Gussmasse ist typischerweise für alle bekannten Gießverfahren, wie Standguss, Spritzguss, Rotations- und Schleuderguss, geeignet. Alternativ lassen sich aufgrund der geringen Viskosität hohe Einspritzgeschwindigkeiten realisieren, wobei in diesem Fall dann mit Überdruck gearbeitet werden muss. Außerdem ermöglicht die geringe Viskosität der Gussmasse größere Freiheiten bei der Gestaltung der Gussformen oder der Negativ-Formen für die Gusselemente, da die Gussmasse selbst in kleinste Spalte fließt und kleinste Materialaussparungen in der Negativ-Form auffüllt.

Des Weiteren weist die Gussmasse typischerweise ein günstiges BenetzungsVerhalten auf, was insbesondere dann vorteilhaft ist, wenn Einlegteile vorgesehen sind, die vor dem Einbringen der Gussmasse in die Negativ-Form eingelegt werden, sodass diese letzten Endes vom Kunststoff umhüllt oder ummantelt sind. Im Falle eines Kabelbündels gelangt die Gussmasse dabei auch zwischen die einzelnen Kabel des Kabelbündels, so dass auch kleinste Zwischenräume, sofern vorhanden, aufgefüllt werden. Infolgedessen weist dann ein mit einem solchen Gusselement versehenes Kabelbündel eine hohe Längswasserdichtigkeit auf.

Vor allem, wenn entsprechende Einlegteile vorgesehen sind, ist es zudem günstig, dass bei entsprechenden In-situ-Polymerisationsverfahren mit geringeren Temperaturen gearbeitet wird als dies bei der Nutzung einer Thermoplast-Schmelze der Fall ist, da in diesem Fall auch relativ empfindliche Einlegteile mit einem entsprechenden Kunststoff ummantelt oder vergossen werden können.

Insgesamt ist daher die mechanische und thermische Belastung des zu umgießenden elektrischen Bauteils im Vergleich zu herkömmlichen Spritzgießen von thermoplastischen Schmelzen oder auch Hotmelts deutlich geringer.

Zweckdienlicherweise bilden, wie bisher üblich, thermoplastische Kunststoffe oder ein thermoplastischer Kunststoff die Kunststoffkomponenten des Bordnetzelements aus und es werden geeignete Zusammensetzungen für die Gussmasse verwendet, die zur Herstellung des entsprechenden Kunststoffs eingesetzt wird. Bevorzugt kommt dabei Polyamid zum Einsatz und dementsprechend ist das Gusselement vorzugsweise als Gusspolyamid-Element ausgebildet. In diesem Fall enthält die Gussmasse dann typischerweise Lactam, einen Katalysator sowie einen Aktivator, wobei als Lactam beispielsweise auch Caprolactam aus nachwachsenden Rohstoffen eingesetzt wird.

Ein so hergestellter thermoplastischer Kunststoff weist alle für diesen typischen Eigenschaften auf, die diesen für die Verwendung im Kraftfahrzeugbereich interessant machen, also insbesondere ein vorteilhaftes mechanisches Verhalten sowie eine hohe thermische und/oder chemische Beständigkeit. Des Weiteren sind Thermoplaste prinzipiell für Kunststoffschweißen geeignet und lassen sich darüber hinaus relativ gut recyceln. Durch die In-situ-Polymerisation ist zudem der Vorteil gegeben, dass sich die entsprechenden Gusselemente relativ leicht aus der Negativ-Form oder Gussform herauslösen lassen, und zwar ohne den Einsatz eines Trennmittels, wie dies im Falle von Schäumungsprozessen üblicherweise notwendig ist.

Wie bereits zuvor erwähnt, eignet sich das In-situ-Polymerisationsverfahren nicht nur zur Herstellung unterschiedlicher Kunststoffe, sondern auch zur Fertigung sehr unterschiedlicher Gusselemente. So ist der elektrische Baustein gemäß einer Ausführungsvariante eine einfache elektrische Leitung, beispielsweise aus mehreren zu einem Leitungsbündel zusammengefassten Leiteradern, die vom Gusselement zumindest bereichsweise ummantelt ist. In diesem Fall fungiert das Gusselement dann zumindest in einem Bereich beispielsweise als Isolierung nach Art einer Isolierummantelung.

Einer weiteren Ausführungsvariante entsprechend ist ein Kabel oder Kabelbündel mit einem entsprechenden Gusselement versehen, wobei das Gusselement hier zum Beispiel als mechanische Schutzhülle fungiert. Diese Schutzhülle verhindert dann beispielsweise ein Durchscheuern des Kabels bzw. von Kabeln des Kabelbündels infolge von Berührungen mit anderen Bauteilen oder Baugruppen, die durch Vibrationen hervorgerufen werden. Entsprechende Schutzhüllen oder Isolierungen lassen sich dabei auch über längere Abschnitte hinweg realisieren, da die geringe Viskosität der Gussmasse auch die Befüllung von Gussformen mit langen Fließwegen und somit die Fertigung von verhältnismäßig langen Gusselementen erlaubt.

Einer weiteren Ausgestaltung entsprechend dient das Gusselement als Abdichtelement beispielsweise für eine Kabeldurchführung durch eine Wandung und ist dabei insbesondere nach Art einer Tülle ausgestaltet. Je nach Anwendungszweck und Einsatzort oder vielmehr je nach Gegebenheiten am Einsatzort ist es dabei weiter bevorzugt vorgesehen, die In-situ-Polymerisation und somit die Herstellung des Gusselements unmittelbar am Einsatzort vorzunehmen. Ist das Gusselement also beispielsweise als Dichtelement oder Abdichtelement für eine Kabeldurchführung durch eine Wandung vorgesehen, so lassen sich zwei Teilformen oder Halbschalen der Gussform für das Gusselement beidseitig an der entsprechenden Wandung im Bereich der Kabeldurchführung platzieren, die ein bereits in der Kabeldurchführung positioniertes Kabel im Bereich der Kabeldurchführung umschließen. Nachfolgend wird in beide Teilformen die Füllmasse oder Gussmasse eingebracht, so dass die In-situ-Polymerisation im wahrsten Sinne des Wortes unmittelbar vor Ort erfolgt, also genau dort, wo das Bordnetzelement und insbesondere das Gusselement des Bordnetzelementes letzten Endes platziert sein soll.

Des Weiteren ist es von Vorteil, ein entsprechendes In-situ-Polymerisationsverfahren zur Herstellung eines Gusselementes zu nutzen, welches als formstabilisierendes Element ausgestaltet ist und zur Ausbildung eines formstabilen Kabelsatzes dient. An dieser Stelle sei darauf hingewiesen, dass Kabelsätze für den Kraftfahrzeugbereich häufig als Baugruppen vorgefertigt werden und dann im Rahmen eines Montageprozesses in ein Kraftfahrzeug eingebaut werden. Zur Vereinfachung des Montageprozesses wird den Kabelsätzen, häufig auch als Kabelbaum bezeichnet, zumindest in einzelnen Bereichen mit Hilfe von formstabilen Elementen eine bestimmte geometrische Form aufgezwungen, die die Form des Bauraums im Kraftfahrzeug widerspiegelt, so dass der Kabelsatz im Rahmen der Montage nicht umständlich in den Bauraum eingebracht werden muss, sondern einfach in den Bauraum eingelegt werden kann. Auch derartige formgebende Elemente lassen sich durch ein In-situ-Polymerisationsverfahren herstellen, wobei die formstabilisierenden Elemente dann durch die Gusselemente gegeben sind. Entsprechende Gusselemente weisen hierbei beispielsweise eine einfache lineare, hohlzylinderartige Form, eine L-Form, eine S-Form oder aber eine komplexere geometrische Form mit Abzweigungen auf. Auf die die formstabilisierenden Elemente werden in einigen Anwendungsfällen dann vorgefertigte Tüllen, insbesondere Dichtungs-Tüllen, beispielsweise aus Gummi aufgezogen.

Weiter ist es vorteilhaft, ein Steckverbinder-Gehäuseelement eines Steckverbinders durch In-situ-Polymerisation herzustellen, wobei in diesem Fall der elektrische Baustein als Steckverbinder ausgebildet und das Gusselement als Steckverbinder-Gehäuseelement ausgestaltet ist.

Günstig ist es außerdem, die Kunststoffelemente einer elektrischen Sicherung mittels des hier vorgestellten Verfahrens herzustellen. Insbesondere ein Sicherungs-Gehäuseelement eines elektrischen Bausteins, der als elektrische Sicherung ausgebildet ist, lässt sich durch ein entsprechendes Gusselement herstellen.

Wie bereits zuvor erwähnt, eignet sich das In-situ-Polymerisationsverfahren auch in solchen Fällen, in denen Einlegteile in einem Gusselement vorgesehen sind, und zwar selbst dann, wenn die entsprechenden Einlegteile empfindlich, also beispielsweise temperaturempfindlich oder druckempfindlich, sind. Hierbei ist es vorgesehen, mittels des hier vorgestellten Verfahrens auch Sensoren herzustellen, also elektrische Bausteine, die einen Sensor ausbilden, wobei in diesem Fall das Gusselement als Sensor-Gehäuseelement dient, welches eine elektrische Baugruppe einschließt. Ein auf diese Weise hergestellter Sensor ist dabei insbesondere durch eine vergossene elektrische Baugruppe gegeben. Hierbei erleichtert der typischerweise geringere Einspritzdruck die Positionierung und Fixierung von Einlegteilen in der Gußform und eine Verschiebung der Einlegteile durch die Gussmasse wird vermieden.

Das Prinzip lässt sich dabei prinzipiell auf elektrische oder elektronische Baugruppen übertragen, die nicht zur Ausfüllung eines Sensors dienen. Die Größe oder Komplexität der entsprechenden elektrischen oder elektronischen Baugruppe ist dabei nicht von Bedeutung und dementsprechend werden auch Elektronikbaugruppen, die beispielsweise eine Leiterplatine oder Leiterplatte umfassen, durch ein entsprechendes In-situ-Polymerisationsverfahren vergossen oder mit einem anderen Gehäuseelement versehen.

Des Weiteren ist es günstig, elektrische Kontakte mit einem Kontaktschutz-Gehäuseelement zu versehen, welches durch ein entsprechendes mittels In-situ-Polymerisation hergestelltes Gusselement ausgebildet ist. Der elektrische Kontakt ist hierbei beispielsweise durch eine Steckverbindung, Schraubverbindung, Crimpverbindung, Klemmverbindung, Klebeverbindung oder Lötverbindung gegeben, die z.B. zwischen zwei elektrischen Leitern aus verschiedenen Metallen hergestellt ist. In diesem Fall dient das Gusselement dann vor allem als Korrosionsschutz, in dem das Gusselement den elektrischen Kontakt flüssigkeitsdicht einschließt. Dabei werden durch den typischerweise verringerten Verarbeitungsdruck Litzenabrisse beim Vergießen verhindert.

Darüber hinaus ist es von Vorteil, nicht-elektrische Hilfselemente, wie zum Beispiel Schnapphaken oder Schraubdome, als zusätzliche funktionale Einlegteile vorzusehen und entsprechend in eine Gußform einzubringen, bevor diese mit der Gussmasse aufgefüllt wird. Alternativ werden derartige Funktionselemente oder Hilfselemente durch die Gussform selbst ausgebildet. Der Detailgrad, mit dem sich entsprechende Funktionselemente realisieren und ausformen lassen, hängt dabei wiederum vor allem von der Viskosität der Gussmasse ab, die bestimmt, wie fein die Strukturen der Gussform ausgebildet sein können, damit eine Auffüllung mit der Gussmasse noch möglich ist. Bevorzugt werden dabei durch die Formen der Gusselemente vor allem Befestigungselemente wie zum Beispiel Gewinde ausgebildet.

Ausführungsbeispiele der Erfindung werden nachfolgend anhand einer schematischen Zeichnung näher erläutert. Darin zeigen:
- FIG 1: in einer perspektivischen Ansicht ein Kabel mit einer Schutzhülle,
- FIG 2: in einer Seitenansicht ein Kabelstrang mit einem formgebenden Element,
- FIG 3: in einer Seitenansicht eine vergossene Kontaktverbindung,
- FIG 4: in einer Seitenansicht eine eingeschlossene Schmelzsicherung,
- FIG 5: in einer Seitenansicht eine vergossene Elektronikbaugruppe,
- FIG 6: in einer perspektivischen Ansicht ein Kabelende mit einem Steckverbinder sowie
- FIG 7: in einer Seitenansicht Gusselement mit mehreren Funktionselementen.

Einander entsprechende Teile sind in allen Figuren jeweils mit den gleichen Bezugszeichen versehen.

Ein nachfolgend exemplarisch beschriebenes Bordnetzelement 2 ist für ein Kraftfahrzeug-Bordnetz ausgelegt und wird dementsprechend in ein Kraftfahrzeug eingebaut. Es umfasst einen elektrischen Baustein 4, welcher zumindest bereichsweise von einem Gusselement 6 umgossen oder in ein Gusselement 6 eingeschlossen ist. Das Gusselement 6 besteht dabei aus einem Plastomer, welches durch ein Polymerisationsverfahren aus Monomeren hergestellt wird. Die Polymerisation erfolgt dabei in einer Negativ-Form oder Gussform für das Gusselement 6, weswegen in diesem Fall auch von einem In-situ-Polymerisationsverfahren gesprochen wird.

Für die Fertigung des Bordnetzelements 2 wird also der elektronische Baustein 4 oder zumindest ein Teil des elektrischen Bausteins 4 in die entsprechende Gussform eingelegt, nachfolgend wird die Gussform geschlossen und die Ausgangsstoffe für das In-situ-Polymerisationsverfahren werden in die Gussform eingegossen.

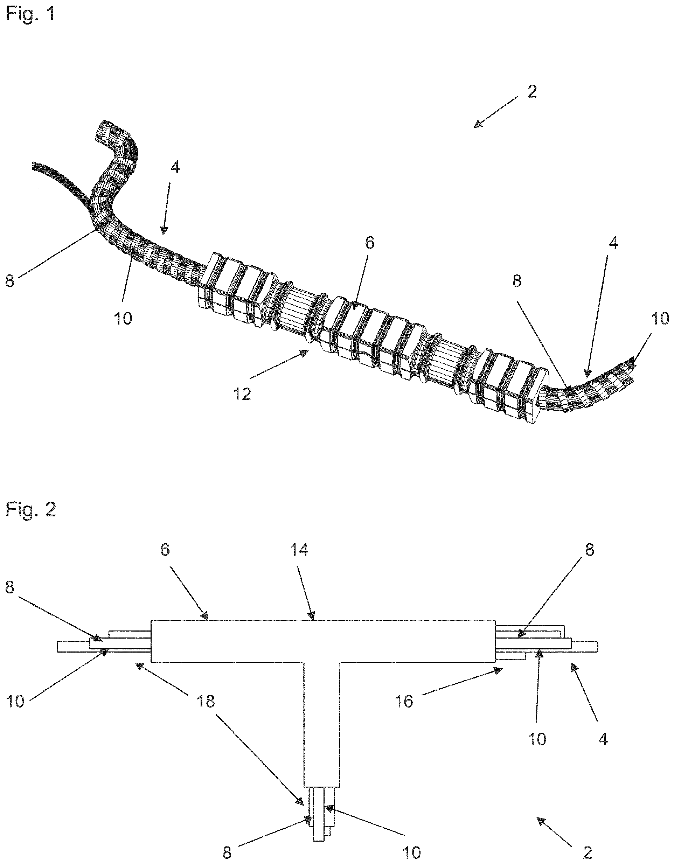

Im Ausführungsbeispiel gemäß Fig. 1 handelt es sich bei dem elektrischen Baustein 4 um ein Kabel 8, dessen Isolierung 10 in einem Abschnitt von einem als Schutzmantel oder Schutzhülle 12 ausgebildeten Gusselement 6 umgeben oder in dieses Gusselement 6 eingebettet ist. Das Gusselement 6 dient hierbei als mechanischer Schutz, der ein Durchscheuern der Isolierung 10 durch Reibung an einer nicht näher dargestellten Wandung des Kraftfahrzeuges verhindern soll.

Dagegen ist das Gusselement 6 im Ausführungsbeispiel gem. Fig. 2 eher starr ausgestaltet, um auf diese Weise ein formstabilisierendes Element 14 oder ein formgebendes Element auszubilden. Das formstabilisierende Element 14 dient dabei zur Ausbildung eines formstabilen Kabelsatzes, bei dem sich ein Kabelstrang 16 aus mehreren Kabeln 8 in einem Bereich in zwei Teilkabelstränge 18 aufgespaltet. Die beiden Teil-Kabelstränge 18 werden dabei mit Hilfe des T-förmigen formstabilisierenden Elements 14 räumlich voneinander getrennt, wobei die Kabel 8 eines Teil-Kabelstranges 18 in einem rechten Winkel von den übrigen Kabeln 8 weggeführt sind. Das formstabilisierende Element 14 weist hierbei im Wesentlichen die Form des Bauraumes im Kraftfahrzeug auf, in welchem der Kabelstrang oder vielmehr der Abschnitt des Kabelstranges 16, in welchem die Aufspaltung in zwei Teil-Kabelstränge 18 erfolgt, eingebaut oder für den Einbau positioniert werden soll. Hierdurch lässt sich der Kabelstrang 16 leichter im Rahmen eines Montageprozesse in das Kraftfahrzeug einfügen, indem das formstabilisierende Element 14 zusammen mit dem entsprechenden Abschnitt des Kabelstranges 16 in den entsprechenden Bauraum einfach einlegt wird.

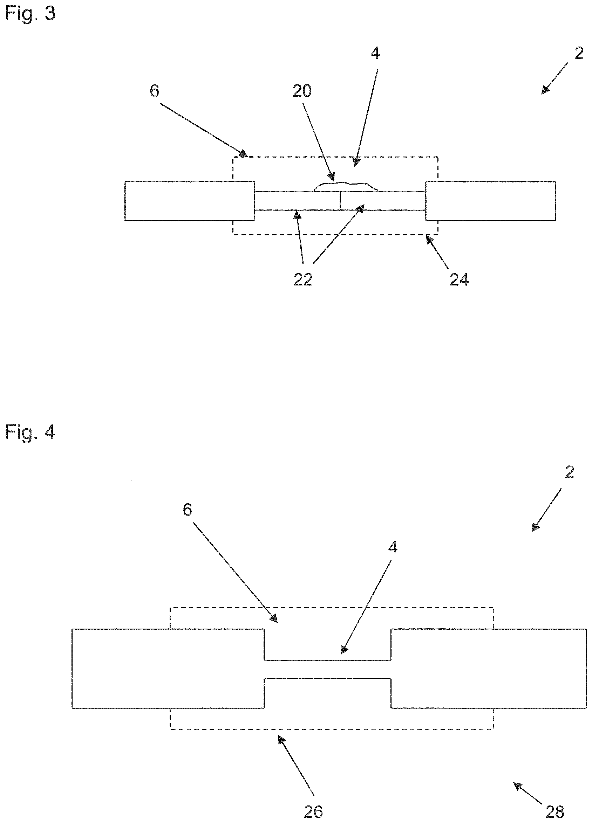

In Fig. 3 ist ein weiteres Ausführungsbeispiel skizziert, bei dem der elektrische Baustein 4 durch einen elektrischen Kontakt 20 zwischen zwei Leitern 22 gegeben ist. Dieser elektrische Kontakt 20 ist zum Schutz vor Korrosion vergossen, so dass das Gusselement 6 in diesem Ausführungsbeispiel als Kontaktschutz-Gehäuseelement 24 dient.

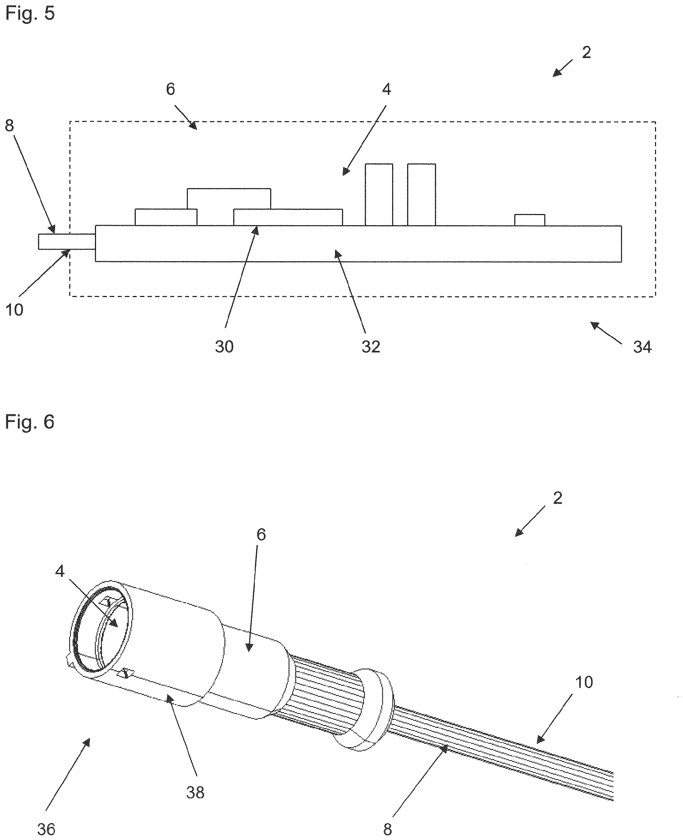

Die Ausführungsbeispiele gemäß Fig. 4 und Fig. 5 zeigen weitere Varianten des Gusselements 6, bei dem dieses eine Art Gehäuse ausbildet. Dabei ist das Gusselement 6 gemäß Fig. 4 als Sicherungs-Gehäuseelement ausgestaltet und dient dementsprechend als Gehäuse für eine elektrische Sicherung, genauer eine Schmelzsicherung 28, die in diesem Fall den elektrischen Baustein ausbildet.

Im Ausführungsbeispiel gemäß Fig. 5 ist der elektronische Baustein 4 im Vergleich dazu wesentlich komplexer gestaltet und durch eine Elektronikbaugruppe 30 gegeben, die eine Leiterplatte 32 umfasst und einen Sensor 34 oder eine Sensoreinheit ausbildet. Diese Elektronikbaugruppe 30 ist als vergossene Elektronikbaugruppe 30 durch eine Kunststoffumhüllung geschützt und dementsprechend in ein Gusselement 6 eingebettet, das nach Art eines schützenden Gehäuses ausgestaltet ist.

Fig. 6 zeigt weiter ein Kabel 8 mit einem Steckverbinder 36. Der Steckverbinder 36 weist hierbei ein Steckverbinder-Gehäuseelement 38 auf, welches durch ein In-situ-Polymerisationsverfahren hergestellt wurde und dementsprechend durch das Gusselement 6 ausgebildet ist. Im Steckverbinder-Gehäuseelement 38 sind zwei nicht näher dargestellte Steckkontakte untergebracht, die durch das Steckverbinder-Gehäuseelement unter anderem gegen eine Berührung gesichert sind und die je nach Betrachtungsweise Teil des elektrischen Bausteins 4 sind oder diesen ausbilden.

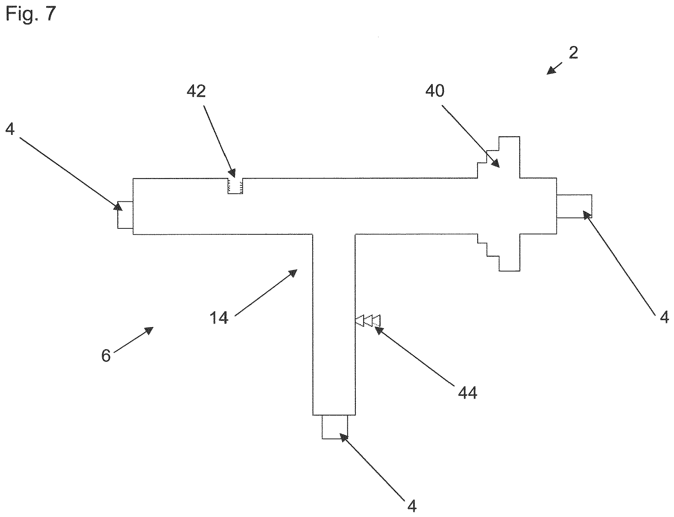

In Fig. 7 ist schließlich ein Gusselement 6 gezeigt, welches mehrere Funktionen erfüllt und durch verschiedene geometrische Teilformen mehrere Funktionselemente ausbildet. Zum einen dient das Gusselement 6 wie im Ausführungsbeispiel gemäß Fig. 2 als formgebendes oder formstabilisierendes, T-förmiges Element 14 für einen Kabelstrang 16 aus mehreren Kabeln 8, die in diesem Ausführungsbeispiel den elektrischen Baustein 4 bilden. Zudem weist das Gusselement 6 in einem Bereich eine Ausformung auf, die nach Art einer Dichtungs-Tülle 40 gestaltet ist und somit als Funktionselement ein Dichtungselement ausbildet. Weiter weist das Gusselement gemäß Fig. 7 eine Gewindeaussparung 42, also eine zylinderartige Materialaussparung mit Innengewinde, auf, die als Befestigungselement dient und in die zum Beispiel ein Gewindebolzen einschraubbar ist. Außerdem ist in das Gusselement 6 aus Fig. 7 ein nicht-elektrisches Einlegeteil eingebettet, welches als Steckelement 44 fungiert.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Bordnetzelement
- 4: Elektrischer Baustein
- 6: Gusselement
- 8: Kabel
- 10: Isolierung
- 12: Schutzhülle
- 14: formstabilisierendes Element
- 16: Kabelstrang
- 18: Teil-Kabelstrang
- 20: Elektrischer Kontakt
- 22: Leiter
- 24: Kontaktschutz-Gehäuseelement
- 26: Sicherungs-Gehäuseelement
- 28: Elektrische Sicherung
- 30: Elektronikbaugruppe
- 32: Leiterplatte
- 34: Sensor
- 36: Steckverbinder
- 38: Steckverbinder-Gehäuseelement
- 40: Dichtungstülle
- 42: Gewindeaussparung
- 44: Steckelement

## Patentansprüche

1. Bordnetzelement (2) für ein Kraftfahrzeug, umfassend einen elektrischen Baustein, welcher zumindest bereichsweise von einem Gusselement (6) umgossen ist,
**dadurch gekennzeichnet,**
**dass** das Gusselement (6) durch ein In-situ-Polymerisationsverfahren hergestellt ist.

2. Bordnetzelement (2) nach Anspruch 1,
**dadurch gekennzeichnet**
**dass** das Gusselement (6) aus einem thermoplastischen Kunststoff, insbesondere aus Polyamid besteht.

3. Bordnetzelement (2) nach Anspruch 1 oder 2,
**dadurch gekennzeichnet**
**dass** der elektrische Baustein (4) eine elektrische Leitung umfasst und dass das Gusselement (6) die elektrische Leitung zumindest bereichsweise umhüllt.

4. Bordnetzelement (2) nach einem der vorhergehenden Ansprüche,
**dadurch gekennzeichnet,**
**dass** das Gusselement (6) als Abdichtelement (40) für eine Kabeldurchführung ausgebildet ist.

5. Bordnetzelement (2) nach einem der vorhergehenden Ansprüche,
**dadurch gekennzeichnet,**
**dass** das Gusselement (6) als formstabilisierendes Element (14) ausgestaltet ist zur Ausbildung eines formstabilen Kabelsatzes.

6. Bordnetzelement (2) nach einem der vorhergehenden Ansprüche,
**dadurch gekennzeichnet,**
**dass** der elektrische Baustein (4) einen Steckverbinder ausbildet und dass das Gusselement (6) als Steckverbinder-Gehäuseelement (38) ausgestaltet ist.

7. Bordnetzelement (2) nach einem der vorhergehenden Ansprüche,
**dadurch gekennzeichnet,**
**dass** der elektrische Baustein (4) eine elektrische Sicherung (28) ausbildet und dass das Gusselement (6) ein Sicherungs-Gehäuseelement ausbildet.

8. Bordnetzelement (2) nach einem der vorhergehenden Ansprüche,
**dadurch gekennzeichnet,**
**dass** der elektrische Baustein (4) einen Sensor ausbildet und dass das Gusselement (6) als Sensor-Gehäuseelement ausgestaltet ist.

9. Bordnetzelement (2) nach einem der vorhergehenden Ansprüche,
**dadurch gekennzeichnet,**
**dass** der elektrische Baustein (4) als elektrischer Kontakt ausgebildet ist und dass das Gusselement (6) als Kontaktschutz-Gehäuseelement (24) ausgestaltet ist.

10. Bordnetzelement (2) nach einem der vorhergehenden Ansprüche,
**dadurch gekennzeichnet,**
**dass** der elektrische Baustein (4) eine Elektronikbaugruppe ausbildet, die eine Leiterplatte (32) umfasst, und dass das Gusselement (6) als Verguss-Element für die Elektronikbaugruppe (30) ausgestaltet ist.

11. Bordnetzelement (2) nach einem der vorhergehenden Ansprüche,
**dadurch gekennzeichnet,**
**dass** das Gusselement (6) zusätzlich ein Hilfselement (42) ausbildet.

12. Bordnetzelement (2) nach einem der vorhergehenden Ansprüche,
**dadurch gekennzeichnet,**
**dass** das Gusselement (6) zusätzlich ein Hilfselement (42) ausbildet, welches als Befestigungselement (42) und insbesondere als Gewinde-Befestigungselement (42) ausgestaltet ist.

13. Kraftfahrzeug mit einem Bordnetzelement (2) nach einem der vorherigen Ansprüche.

14. Verfahren zur Herstellung eines Bordnetzelements (2) nach einem der Ansprüche 1 bis 10, wobei das Gusselement (6) in einem In-situ-Polymerisationsverfahren hergestellt wird.

15. Verfahren nach Anspruch 14,
**dadurch gekennzeichnet,**
**dass** das Gusselement (6) als Abdichtelement (40) für eine Kabeldurchführung ausgebildet wird oder dass das Gusselement (6) als formstabilisierendes Element (14) ausgestaltet wird zur Ausbildung eines formstabilen Kabelsatzes.

## Claims

1. Vehicle electrical system component (2) for a motor vehicle, comprising an electrical module which is surrounded by casting at least in certain areas by a cast component (6), **characterized in that** the cast component (6) is produced by an in-situ polymerization method.

2. Vehicle electrical system component (2) according to Claim 1, **characterized in that** the cast component (6) is composed of a thermoplastic material, in particular of a polyamide.

3. Vehicle electrical system component (2) according to Claim 1 or 2, **characterized in that** the electrical module (4) comprises an electrical line, and **in that** the cast component (6) encloses the electrical line at least in certain areas.

4. Vehicle electrical system component (2) according to one of the preceding claims, **characterized in that** the cast component (6) is embodied as a sealing component (40) for a cable feedthrough.

5. Vehicle electrical system component (2) according to one of the preceding claims, **characterized in that** the cast component (6) is configured as a dimension-stabilizing component (14) to form a dimensionally stable cable set.

6. Vehicle electrical system component (2) according to one of the preceding claims, **characterized in that** the electrical module (4) forms a plug-type connector, and **in that** the cast component (6) is configured as a plug-type connector housing component (38).

7. Vehicle electrical system component (2) according to one of the preceding claims, **characterized in that** the electrical module (4) forms an electrical fuse (28), and **in that** the cast component (6) forms a fuse housing component.

8. Vehicle electrical system component (2) according to one of the preceding claims, **characterized in that** the electrical component (4) forms a sensor, and **in that** the cast component (6) is configured as a sensor housing component.

9. Vehicle electrical system component (2) according to one of the preceding claims, **characterized in that** the electrical module (4) is embodied as an electrical contact, and **in that** the cast component (6) is configured as a contact-protection housing component (24) .

10. Vehicle electrical system component (2) according to one of the preceding claims, **characterized in that** the electrical module (4) forms an electronic assembly which comprises a circuit board (32), and **in that** the cast component (6) is configured as a potting component for the electronic assembly (30).

11. Vehicle electrical system component (2) according to one of the preceding claims, **characterized in that** the cast component (6) additionally forms an auxiliary component (42).

12. Vehicle electrical system component (2) according to one of the preceding claims, **characterized in that** the cast component (6) additionally forms an auxiliary component (42) which is configured as a fastening component (42) and, in particular, as a thread-type fastening component (42).

13. Motor vehicle having a vehicle electrical system component (2) according to one of the preceding claims.

14. Method for producing a vehicle electrical system component (2) according to one of Claims 1 to 10, wherein the cast component (6) is produced in an in-situ polymerization method.

15. Method according to Claim 14, **characterized in that** the cast component (6) is embodied as a sealing component (40) for a cable feedthrough, or **in that** the cast component (6) is configured as a dimension-stabilizing component (14) for forming a dimensionally stable cable set.

## Revendications

1. Élément de réseau de bord (2) pour un véhicule à moteur, comprenant un composant électrique, lequel est enrobé au moins partiellement par un élément moulé (6), **caractérisé en ce que** l'élément moulé (6) est fabriqué par un processus de polymérisation in situ.

2. Élément de réseau de bord (2) selon la revendication 1,
**caractérisé en ce que** l'élément moulé (6) est constitué d'un plastique thermoplastique, en particulier de polyamide.

3. Élément de réseau de bord (2) selon la revendication 1 ou 2,
**caractérisé en ce que** le composant électrique (4) comprend une ligne électrique et **en ce que** l'élément moulé (6) enveloppe au moins partiellement la ligne électrique.

4. Élément de réseau de bord (2) selon l'une des revendications précédentes,
**caractérisé en ce que** l'élément moulé (6) est réalisé comme élément d'étanchéité (40) pour un passe-câble.

5. Élément de réseau de bord (2) selon l'une des revendications précédentes,
**caractérisé en ce que** l'élément moulé (6) est configuré comme élément stabilisant la forme (14) afin de réaliser un faisceau de câbles indéformable.

6. Élément de réseau de bord (2) selon l'une des revendications précédentes,
**caractérisé en ce que** le composant électrique (4) forme un connecteur et **en ce que** l'élément moulé (6) est configuré comme élément de boîtier de connecteur (38).

7. Élément de réseau de bord (2) selon l'une des revendications précédentes,
**caractérisé en ce que** le composant électrique (4) forme un coupe-circuit électrique (28) et **en ce que** l'élément moulé (6) forme un élément de boîtier de coupe-circuit.

8. Élément de réseau de bord (2) selon l'une des revendications précédentes,
**caractérisé en ce que** le composant électrique (4) forme un capteur et **en ce que** l'élément moulé (6) est configuré comme élément de boîtier de capteur.

9. Élément de réseau de bord (2) selon l'une des revendications précédentes,
**caractérisé en ce que** le composant électrique (4) est réalisé sous la forme d'un contact électrique et **en ce que** l'élément moulé (6) est configuré comme élément de boîtier de protection de contact (24).

10. Élément de réseau de bord (2) selon l'une des revendications précédentes,
**caractérisé en ce que** le composant électrique (4) forme un assemblage électronique, lequel comprend une plaque conductrice (32), et **en ce que** l'élément moulé (6) est configuré comme élément d'enrobage pour l'assemblage électronique (30).

11. Élément de réseau de bord (2) selon l'une des revendications précédentes,
**caractérisé en ce que** l'élément moulé (6) forme en outre un élément auxiliaire (42).

12. Élément de réseau de bord (2) selon l'une des revendications précédentes,
**caractérisé en ce que** l'élément moulé (6) forme en outre un élément auxiliaire (42), lequel est configuré comme élément de fixation (42) et en particulier comme élément de fixation à vis (42).

13. Véhicule à moteur doté d'un élément de réseau de bord (2) selon l'une des revendications précédentes.

14. Procédé de fabrication d'un élément de réseau de bord (2) selon l'une des revendications 1 à 10, dans lequel l'élément moulé (6) est fabriqué dans un processus de polymérisation in situ.

15. Procédé selon la revendication 14,
**caractérisé en ce que** l'élément moulé (6) est réalisé comme élément d'étanchéité (40) pour un passe-câble ou **en ce que** l'élément moulé (6) est configuré comme élément stabilisant la forme (14) afin de réaliser un faisceau de câbles indéformable.
